# EUROPEAN PATENT APPLICATION

(11) **EP 4 564 483 A1**
(43) Date of publication of application: **04.06.2025**
(21) Application number: 23846643.7
(22) Date of filing: 27.07.2023
(51) Int. Cl.: H01M 4/62, C08F 265/06, H01M 4/13, H01M 4/139, H01M 10/052, H01M 10/0566

(54) **BINDER COMPOSITION FOR NONAQUEOUS SECONDARY BATTERY ELECTRODE, SLURRY COMPOSITION FOR NONAQUEOUS SECONDARY BATTERY ELECTRODE, ELECTRODE FOR NONAQUEOUS SECONDARY BATTERY, AND NONAQUEOUS SECONDARY BATTERY**

(30) Priority: 29.07.2022 JP 2022122283
(71) Applicant: Zeon Corporation, Tokyo 100-8246 (JP)
(72) Inventor: HAYASAKA, Kentaro, Tokyo 100-8246 (JP); SONG, Ruichong, Tokyo 100-8246 (JP)
(74) Representative: Maiwald GmbH
(86) International application number: PCT/JP2023/027654
(87) International publication number: WO 2024/024913

(57) **Abstract**

Provided is a binder composition for a non-aqueous secondary battery electrode that has good tackiness and that enables the formation of an electrode for a non-aqueous secondary battery having excellent peel strength. The binder composition for a non-aqueous secondary battery electrode contains a particulate binder and water. The particulate binder includes a polymer (A) including a (meth)acrylic acid ester monomer unit. A ratio of an average particle diameter Da of the particulate binder measured by dynamic light scattering at pH 8.0 relative to an average particle diameter Da of the particulate binder measured by dynamic light scattering at pH 6.0 is within a specific range.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

For example, Patent Literature (PTL) 1 to 4 describe the use of particulate polymers including monomer units such as an aromatic vinyl monomer unit, an aliphatic conjugated diene monomer unit, and a carboxyl group-containing monomer unit, for example, as binders contained in binder compositions.

### CITATION LIST

### Patent Literature

PTL 1: JP6645430B2
PTL 2: JP6627763B2
PTL 3: JP5701519B2
PTL 4: WO2010/114119A1

### SUMMARY

### (Technical Problem)

It is desirable for a binder composition to have good tackiness from a viewpoint of improving binder production efficiency.

On the other hand, it is also desirable to ensure sufficiently high close adherence between an electrode mixed material layer and a current collector (i.e., peel strength of an electrode) in a situation in which an electrode mixed material layer is formed from a slurry composition containing a binder composition in order to produce an electrode.

However, with the binder compositions of the conventional techniques described above, it has been difficult to maintain good tackiness of the binder composition while also increasing peel strength of an electrode that is formed using a slurry composition containing the binder composition. In particular, there has been demand for forming electrodes through high-speed slurry composition coating in recent years from a viewpoint of productivity, thus making it desirable to increase peel strength even in a situation in which coating with a slurry composition is performed at high speed.

Accordingly, one object of the present disclosure is to provide a binder composition for a non-aqueous secondary battery electrode that has good tackiness and that enables the formation of an electrode for a non-aqueous secondary battery having excellent peel strength.

Another object of the present disclosure is to provide a slurry composition for a non-aqueous secondary battery electrode that enables the formation of an electrode for a non-aqueous secondary battery having excellent peel strength.

Yet another object of the present disclosure is to provide an electrode for a non-aqueous secondary battery having excellent peel strength and a non-aqueous secondary battery including this electrode for a non-aqueous secondary battery.

### (Solution to Problem)

The inventors conducted diligent investigation with the aim of solving the problems described above. The inventors discovered that with regards to a binder composition containing a particulate binder and water, by including a polymer (A) including a (meth)acrylic acid ester monomer unit in the particulate binder and by setting a ratio Da_{(pH8.0)}/Da_{(pH6.0)} of an average particle diameter Da_{(pH8.0)} of the particulate binder measured by dynamic light scattering at pH 8.0 relative to an average particle diameter Da_{(pH6.0)} of the particulate binder measured by dynamic light scattering at pH 6.0 within a specific range, it is possible to maintain good tackiness of the binder composition while also causing an electrode that is formed using the slurry composition to display excellent peel strength. In this manner, the inventors completed the present disclosure.

Specifically, with the aim of advantageously solving the problems set forth above, the present disclosure provides:
[1] a binder composition for a non-aqueous secondary battery electrode comprising a particulate binder and water, wherein
   the particulate binder includes a polymer (A) including a (meth)acrylic acid ester monomer unit, and
   a ratio Da_{(pH8.0)}/Da_{(pH6.0)} of an average particle diameter Da_{(pH8.0)} of the particulate binder measured by dynamic light scattering at pH 8.0 relative to an average particle diameter Da_{(pH6.0)} of the particulate binder measured by dynamic light scattering at pH 6.0 is more than 1.10.

A binder composition in which a particulate binder includes a polymer (A) including a (meth)acrylic acid ester monomer unit and has a ratio of Da_{(pH8.0)}/Da_{(pH6.0)} that is within a specific range in this manner has good tackiness and can form an electrode having excellent peel strength.

Note that a "monomer unit" of a polymer referred to in the present disclosure is a "repeating unit derived from the monomer that is included in a polymer obtained using that monomer".

Also note that the average particle diameter Da of a particulate polymer referred to in the present disclosure can, more specifically, be measured by a method described in the EXAMPLES section of the present specification.

Moreover, the present disclosure preferably provides:
the binder composition for a non-aqueous secondary battery electrode according to the foregoing [1], wherein the particulate binder includes, in a surface layer portion, a polymer (B) including an acidic functional group-containing monomer unit in a proportion of 80 mass% or more.

As a result of the particulate binder including a polymer (B) including an acidic functional group-containing monomer unit in a surface layer portion, the binder composition has even better tackiness and can form an electrode having even better peel strength.

Furthermore, the present disclosure preferably provides:
the binder composition for a non-aqueous secondary battery electrode according to the foregoing [2], wherein the particulate binder includes a particle that contains the polymer (A) at an inner side of the surface layer portion.

As a result of the particulate binder including a particle that contains the polymer (A) at an inner side of the surface layer portion, the binder composition has even better tackiness and can form an electrode having even better peel strength.

Also, the present disclosure preferably provides:
the binder composition for a non-aqueous secondary battery electrode according to the foregoing [3], wherein
the particle is a core-shell particle including a core portion and a shell portion,
the core portion contains the polymer (A), and
the polymer (A) includes the (meth)acrylic acid ester monomer unit in a proportion of 80 mass% or more.

As a result of the particle being a core-shell particle, the binder composition has even better tackiness and can form an electrode having even better peel strength.

Moreover, the present disclosure preferably provides:
the binder composition for a non-aqueous secondary battery electrode according to the foregoing [4], wherein the shell portion contains a polymer (C) including an aromatic vinyl monomer unit in a proportion of 80 mass% or more.

As a result of the shell portion containing a polymer (C) including an aromatic vinyl monomer unit, the binder composition has even better tackiness and can form an electrode having even better peel strength.

Furthermore, the present disclosure preferably provides:
the binder composition for a non-aqueous secondary battery electrode according to the foregoing [4] or [5], wherein a proportion constituted by the core portion in the particulate binder is not less than 50 mass% and not more than 98 mass%.

As a result of the proportion constituted by the core portion being within the range set forth above, the binder composition has even better tackiness and can form an electrode having even better peel strength.

Also, the present disclosure preferably provides:
the binder composition for a non-aqueous secondary battery electrode according to any one of the foregoing [1] to [6], having a pH of not lower than 6.0 and not higher than 10.0.

As a result of the pH being within the range set forth above, the binder composition has even better tackiness and can form an electrode having even better peel strength.

Moreover, the present disclosure provides:
a slurry composition for a non-aqueous secondary battery electrode comprising: an electrode active material; and the binder composition for a non-aqueous secondary battery electrode according to any one of the foregoing [1] to [7].

A slurry composition such as set forth above has good tackiness and can form an electrode having excellent peel strength.

Furthermore, the present disclosure provides:
an electrode for a non-aqueous secondary battery comprising an electrode mixed material layer formed using the slurry composition for a non-aqueous secondary battery electrode according to the foregoing [8].

A slurry electrode such as set forth above has excellent peel strength.

Also, the present disclosure provides:
a non-aqueous secondary battery comprising a positive electrode, a negative electrode, a separator, and an electrolyte solution, wherein at least one of the positive electrode and the negative electrode is the electrode for a non-aqueous secondary battery according to the foregoing [9].

A non-aqueous secondary battery such as set forth above has improved service life and excellent performance in terms of internal resistance and cycle characteristics as a result of an electrode having excellent peel strength being used therein.

### (Advantageous Effect)

According to the present disclosure, it is possible to provide a binder composition for a non-aqueous secondary battery electrode that has good tackiness and that enables the formation of an electrode for a non-aqueous secondary battery having excellent peel strength.

Moreover, according to the present disclosure, it is possible to provide a slurry composition for a non-aqueous secondary battery electrode that enables the formation of an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

### DETAILED DESCRIPTION

The following provides a detailed description of embodiments of the present disclosure.

A presently disclosed binder composition for a non-aqueous secondary battery electrode (hereinafter, also referred to simply as a "binder composition") can be used in production of a presently disclosed slurry composition for a non-aqueous secondary battery electrode (hereinafter, also referred to simply as a "slurry composition"). Moreover, a slurry composition for a non-aqueous secondary battery electrode that is produced using the presently disclosed binder composition for a non-aqueous secondary battery electrode can be used in production of an electrode of a non-aqueous secondary battery such as a lithium ion secondary battery. Furthermore, a feature of a presently disclosed non-aqueous secondary battery is that a presently disclosed electrode for a non-aqueous secondary battery (hereinafter, also referred to simply as an "electrode") formed using the presently disclosed slurry composition for a non-aqueous secondary battery electrode is used therein.

Note that the presently disclosed binder composition for a non-aqueous secondary battery electrode, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

### (Binder composition for non-aqueous secondary battery electrode)

The presently disclosed binder composition for a non-aqueous secondary battery electrode contains a particulate binder and water. The particulate binder includes a polymer (A) including a (meth)acrylic acid ester monomer unit, and a ratio Da_{(pH8.0)}/Da_{(pH6.0)} of an average particle diameter Da_{(pH8.0)} of the particulate binder measured by dynamic light scattering at pH 8.0 relative to an average particle diameter Da_{(pH6.0)} of the particulate binder measured by dynamic light scattering at pH 6.0 is within a specific range. As a result of the presently disclosed binder composition for a non-aqueous secondary battery electrode containing the specific particulate binder described above, the presently disclosed binder composition for a non-aqueous secondary battery electrode has good tackiness and can cause an electrode that is formed using a slurry composition containing the binder composition to display excellent peel strength. Moreover, by using an electrode having excellent peel strength that is formed using a slurry composition containing the presently disclosed binder composition, it is possible to improve performance of a secondary battery. For example, it is possible to improve battery characteristics such as cycle characteristics and also to reduce internal resistance of the secondary battery.

Furthermore, by using the presently disclosed binder composition for a non-aqueous secondary battery electrode, it is possible to cause a formed electrode to display excellent peel strength even in a situation in which the electrode is produced through high-speed coating (application and drying) of a slurry composition that is produced using the binder composition.

### <Particulate binder>

The particulate binder functions as a component for holding components such as an electrode active material in an electrode mixed material layer that is formed using a slurry composition containing the binder composition and thereby preventing shedding of these components from the electrode mixed material layer.

Moreover, the particulate binder is water-insoluble particles that are formed of a specific polymer. Note that when particles of a particulate binder or the like are referred to as "water-insoluble" in the present disclosure, this means that when 0.5 g of the particles are dissolved in 100 g of water at a temperature of 25°C, insoluble content is 90 mass% or more.

### <<Structure of particulate binder>>

Although the particulate binder can have any structure so long as it includes the polymer (A) and so long as Da_{(pH8.0)}/Da_{(pH6.0)} is within a specific range, the particulate binder may include a polymer (B) in a surface layer portion from a viewpoint of facilitating adjustment of Da_{(pH8.0)}/Da_{(pH6.0)} to a desired value. The polymer (B) preferably includes an acidic functional group-containing monomer unit in a proportion of 80 mass% or more.

The structure including the polymer (B) in a surface layer portion may, for example, be a structure that includes a particle containing the polymer (A) at an inner side of a surface layer portion formed of the polymer (B). The particle containing the polymer (A) that is located at an inner side of the surface layer portion is not specifically limited and may be: (i) a particle that is formed of the polymer (A); or (ii) a core-shell particle including a core portion and a shell portion, wherein at least one of the core portion and the shell portion is formed using the polymer (A).

Note that in a case in which the particle containing the polymer (A) is a core-shell particle, it is preferable that the particle is a core-shell particle in which a core portion contains the polymer (A), and more preferable that the particle is a core-shell particle in which a core portion contains the polymer (A) and in which a shell portion contains a polymer (C) including an aromatic vinyl monomer unit in a proportion of 80 mass% or more.

In a case in which the particle containing the polymer (A) is a core-shell particle, the proportion constituted by the core portion in the particulate binder is preferably 50 mass% or more, more preferably 55 mass% or more, and even more preferably 60 mass% or more, and is preferably 98 mass% or less, more preferably 95 mass% or less, even more preferably 90 mass% or less, and particularly preferably 80 mass% or less. When the proportion constituted by the core portion in the particulate binder is within any of the ranges set forth above, peel strength of an electrode and tackiness of the composition can be improved.

In a case in which the particle containing the polymer (A) is a core-shell particle, the proportion constituted by the shell portion in the particulate binder is preferably 1 mass% or more, more preferably 5 mass% or more, and even more preferably 10 mass% or more, and is preferably 40 mass% or less, more preferably 30 mass% or less, and even more preferably 20 mass% or less. When the proportion constituted by the core portion in the particulate binder is within any of the ranges set forth above, peel strength of an electrode and tackiness of the composition can be improved.

In a case in which the particulate binder has a structure including the polymer (B) in a surface layer portion, the proportion constituted by the surface layer portion in the particulate binder is preferably 0.5 mass% or more, more preferably 1 mass% or more, and even more preferably 2 mass% or more, and is preferably 30 mass% or less, more preferably 25 mass% or less, and even more preferably 20 mass% or less. When the proportion constituted by the core portion in the particulate binder is within any of the ranges set forth above, peel strength of an electrode and tackiness of the composition can be improved.

### <<Polymer (A)>>

The polymer (A) includes a (meth)acrylic acid ester monomer unit. Moreover, the polymer (A) may optionally further include an acidic functional group-containing monomer unit, an unsaturated carboxylic acid amide monomer unit, an unsaturated carboxylic acid epoxy monomer unit, and a cross-linkable monomer unit. Furthermore, the polymer (A) may optionally further include monomer units other than a (meth)acrylic acid ester monomer unit, an acidic functional group-containing monomer unit, an unsaturated carboxylic acid amide monomer unit, and an unsaturated carboxylic acid epoxy monomer unit (hereinafter, also referred to as "other monomer units"). Specific examples of monomer units included in the polymer (A) are described further below.

When the amount of all repeating units (monomer units) in the polymer (A) is taken to be 100 mass%, the polymer (A) includes a (meth)acrylic acid ester monomer unit in a proportion of preferably 80 mass% or more, more preferably 85 mass% or more, and even more preferably 90 mass% or more, and preferably 100 mass% or less, more preferably 99 mass% or less, and even more preferably 98 mass% or less. Moreover, when the amount of all repeating units (monomer units) in all polymers forming the particulate binder is taken to be 100 mass%, the polymer (A) includes a (meth)acrylic acid ester monomer unit in a proportion of preferably 50 mass% or more, more preferably 55 mass% or more, and even more preferably 70 mass% or more, and preferably 90 mass% or less, more preferably 80 mass% or less, and even more preferably 77 mass% or less. When the proportion constituted by (meth)acrylic acid ester monomer units among monomer units in the polymer (A) is within any of the ranges set forth above, cycle characteristics of a secondary battery can be improved.

When the amount of all repeating units (monomer units) in the polymer (A) is taken to be 100 mass%, the polymer (A) includes an acidic functional group-containing monomer unit in a proportion of preferably 0.1 mass% or more, more preferably 0.5 mass% or more, and even more preferably 1.0 mass% or more, and preferably 8 mass% or less, more preferably 6 mass% or less, and even more preferably 4 mass% or less. Moreover, when the amount of all repeating units (monomer units) in all polymers forming the particulate binder is taken to be 100 mass%, the polymer (A) includes an acidic functional group-containing monomer unit in a proportion of preferably 0.1 mass% or more, more preferably 0.4 mass% or more, and even more preferably 0.8 mass% or more, and preferably 5 mass% or less, more preferably 4 mass% or less, and even more preferably 3 mass% or less. When the proportion constituted by acidic functional group-containing monomer units among monomer units in the polymer (A) is within any of the ranges set forth above, cycle characteristics of a secondary battery can be improved.

When the amount of all repeating units (monomer units) in the polymer (A) is taken to be 100 mass%, the polymer (A) includes an unsaturated carboxylic acid amide monomer unit in a proportion of preferably 0.1 mass% or more, more preferably 0.5 mass% or more, and even more preferably 1 mass% or more, and preferably 12 mass% or less, more preferably 6 mass% or less, and even more preferably 3 mass% or less. Moreover, when the amount of all repeating units (monomer units) in all polymers forming the particulate binder is taken to be 100 mass%, the polymer (A) includes an unsaturated carboxylic acid amide monomer unit in a proportion of preferably 0.1 mass% or more, more preferably 0.5 mass% or more, and even more preferably 1 mass% or more, and preferably 10 mass% or less, more preferably 5 mass% or less, and even more preferably 3 mass% or less. When the proportion constituted by unsaturated carboxylic acid amide monomer units among monomer units in the polymer (A) is within any of the ranges set forth above, cycle characteristics of a secondary battery can be improved.

When the amount of all repeating units (monomer units) in the polymer (A) is taken to be 100 mass%, the polymer (A) includes a cross-linkable monomer unit in a proportion of preferably 0.1 mass% or more, more preferably 0.5 mass% or more, and even more preferably 0.8 mass% or more, and preferably 12 mass% or less, more preferably 6 mass% or less, and even more preferably 3 mass% or less. Moreover, when the amount of all repeating units (monomer units) in all polymers forming the particulate binder is taken to be 100 mass%, the polymer (A) includes a cross-linkable monomer unit in a proportion of preferably 0.1 mass% or more, more preferably 0.5 mass% or more, and even more preferably 0.8 mass% or more, and preferably 10 mass% or less, more preferably 5 mass% or less, and even more preferably 3 mass% or less. When the proportion constituted by cross-linkable monomer units among monomer units in the polymer (A) is within any of the ranges set forth above, cycle characteristics of a secondary battery can be improved.

When the amount of all repeating units (monomer units) in the polymer (A) is taken to be 100 mass%, the polymer (A) includes other monomer units in a proportion of preferably 0.1 mass% or more, more preferably 0.5 mass% or more, and even more preferably 1.0 mass% or more, and preferably 12 mass% or less, more preferably 6 mass% or less, and even more preferably 3.0 mass% or less. Moreover, when the amount of all repeating units (monomer units) in all polymers forming the particulate binder is taken to be 100 mass%, the polymer (A) includes other monomer units in a proportion of preferably 0.1 mass% or more, more preferably 0.5 mass% or more, and even more preferably 1 mass% or more, and preferably 10 mass% or less, more preferably 5 mass% or less, and even more preferably 3 mass% or less. When the proportion constituted by other monomer units among monomer units in the polymer (A) is within any of the ranges set forth above, cycle characteristics of a secondary battery can be improved.

### <<Polymer (B)>>

The polymer (B) includes an acidic functional group-containing monomer unit. Moreover, the polymer (B) may optionally further include monomer units other than an acidic functional group-containing monomer unit. Specific examples of the "acidic functional group-containing monomer unit" are described further below. Moreover, in a case in which the polymer (A) includes an acidic functional group-containing monomer unit, the acidic functional group-containing monomer unit that is included in the polymer (B) may be the same as or different from the acidic functional group-containing monomer unit that is included in the polymer (A).

When the amount of all repeating units (monomer units) in the polymer (B) is taken to be 100 mass%, the polymer (B) includes an acidic functional group-containing monomer unit in a proportion of preferably 80 mass% or more, more preferably 90 mass% or more, even more preferably 95 mass% or more, and particularly preferably 100 mass%. Moreover, when the amount of all repeating units (monomer units) in all polymers forming the particulate binder is taken to be 100 mass%, the polymer (B) includes an acidic functional group-containing monomer unit in a proportion of preferably 0.5 mass% or more, more preferably 1 mass% or more, and even more preferably 2 mass% or more, and preferably 15 mass% or less, more preferably 10 mass% or less, and even more preferably 5 mass% or less. When the proportion constituted by acidic functional group-containing monomer units among monomer units in the polymer (B) is within any of the ranges set forth above, peel strength of an electrode can be improved.

### <<Polymer (C)>>

The polymer (C) includes an aromatic vinyl monomer unit. Moreover, the polymer (C) may optionally further include monomer units other than an aromatic vinyl monomer unit. Specific examples of the "aromatic vinyl monomer unit" are described further below. Moreover, in a case in which the polymer (A) includes an aromatic vinyl monomer unit, the aromatic vinyl monomer unit that is included in the polymer (C) may be the same as or different from the aromatic vinyl monomer unit that is included in the polymer (A).

When the amount of all repeating units (monomer units) in the polymer (C) is taken to be 100 mass%, the polymer (C) includes an aromatic vinyl monomer unit in a proportion of preferably 80 mass% or more, more preferably 90 mass% or more, even more preferably 95 mass% or more, and particularly preferably 100 mass%. Moreover, when the amount of all repeating units (monomer units) in all polymers forming the particulate binder is taken to be 100 mass%, the polymer (C) includes an aromatic vinyl monomer unit in a proportion of preferably 1 mass% or more, more preferably 5 mass% or more, and even more preferably 10 mass% or more, and preferably 30 mass% or less, more preferably 25 mass% or less, and even more preferably 20 mass% or less. When the proportion constituted by aromatic vinyl monomer units among monomer units in the polymer (C) is within any of the ranges set forth above, tackiness of the composition can be improved.

### <<Monomer units included in polymer (A), polymer (B), and polymer (C)>>

Specific examples of monomer units included in each polymer (polymer (A), polymer (B), and polymer (C)) are as follows.

### [(Meth)acrylic acid ester monomer unit]

Examples of (meth)acrylic acid ester monomers that can form a (meth)acrylic acid ester monomer unit in the particulate binder include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Note that one of these (meth)acrylic acid ester monomers may be used individually, or two or more of these (meth)acrylic acid ester monomers may be used in combination in a freely selected ratio.

### [Acidic functional group-containing monomer unit]

Examples of acidic functional group-containing monomers that can form an acidic functional group-containing monomer unit in the particulate binder include phosphate group-containing monomer units, sulfo group-containing monomer units, and carboxyl group-containing monomer units. Of these examples, carboxyl group-containing monomer units are preferable.

A phosphate group-containing monomer is a monomer that includes a phosphate group and a polymerizable group that can be copolymerized with another monomer. The phosphate group-containing monomer may be a monomer that includes an -O-P(=O)(-OR^{1a})-OR^{2a} group (where R^{1a} and R^{2a} are each independently a hydrogen atom or any organic group), or may be a salt of such a monomer. Specific examples of organic groups that may constitute R^{1a} and R^{2a} include aliphatic groups such as an octyl group and aromatic groups such as a phenyl group.

For example, a compound that includes a phosphate group and an allyloxy group can be used as a phosphate group-containing monomer. The compound including a phosphate group and an allyloxy group may be 3-allyloxy-2-hydroxypropane phosphoric acid.

A sulfo group-containing monomer is a monomer that includes a sulfo group and a polymerizable group that can be copolymerized with another monomer. Examples of sulfo group-containing monomers include sulfo group-containing monomers that do not include a functional group other than a sulfo group and a polymerizable group and salts of such sulfo group-containing monomers; monomers that include an amide group in addition to a sulfo group and a polymerizable group and salts of such monomers; and monomers that include a hydroxyl group in addition to a sulfo group and a polymerizable group and salts of such monomers.

Examples of sulfo group-containing monomers that do not include a functional group other than a sulfo group and a polymerizable group include monomers in which one of the conjugated double bonds of a diene compound such as isoprene or butadiene has been sulfonated, vinyl sulfonic acid, styrene sulfonic acid, and allyl sulfonic acid. Moreover, examples of salts of such monomers include lithium salts, sodium salts, and potassium salts. Examples of monomers that include an amide group in addition to a sulfo group and a polymerizable group include 2-acrylamido-2-methylpropane sulfonic acid (AMPS). Moreover, examples of salts of such monomers include lithium salts, sodium salts, and potassium salts. Examples of monomers that include a hydroxyl group in addition to a sulfo group and a polymerizable group include 3-allyloxy-2-hydroxypropane sulfonic acid (HAPS). Moreover, examples of salts of such monomers include lithium salts, sodium salts, and potassium salts. Of these examples, styrene sulfonic acid, 2-acrylamido-2-methylpropane sulfonic acid (AMPS), and salts thereof are preferable.

A carboxyl group-containing monomer can be a monomer that includes a carboxyl group and a polymerizable group. Specific examples of carboxyl group-containing monomers include ethylenically unsaturated carboxylic acid monomers.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid. Examples of ethylenically unsaturated dicarboxylic acids include maleic acid, fumaric acid, and itaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methyl allyl maleate such as methylmaleic acid, dimethylmaleic acid, phenylmaleic acid, chloromaleic acid, dichloromaleic acid, and fluoromaleic acid; and maleic acid esters such as diphenyl maleate, nonyl maleate, decyl maleate, dodecyl maleate, octadecyl maleate, and fluoroalkyl maleates. Of these examples, ethylenically unsaturated monocarboxylic acids such as acrylic acid and methacrylic acid are preferable.

One of these acidic functional group-containing monomers may be used individually, or two or more of these acidic functional group-containing monomers may be used in combination. Accordingly, the water-insoluble particulate polymer may include just one type of acidic group-containing monomer unit or may include two or more types of acidic group-containing monomer units in combination.

### [Unsaturated carboxylic acid amide monomer unit]

Examples of unsaturated carboxylic acid amide monomers that can form an unsaturated carboxylic acid amide monomer unit in the particulate binder include acrylamide, methacrylamide, N-methylolacrylamide, N-methylolmethacrylamide, N,N-dimethylacrylamide, and hydroxyethyl acrylamide. Note that one of these unsaturated carboxylic acid amide monomers may be used individually, or two or more of these unsaturated carboxylic acid amide monomers may be used in combination in a freely selected ratio.

### [Cross-linkable monomer unit]

Examples of cross-linkable monomers that can form a cross-linkable monomer unit in the particulate binder include monomers that can form a crosslinked structure through polymerization without any specific limitations. A typical example of a cross-linkable monomer is a monomer that is thermally cross-linkable. More specifically, a cross-linkable monomer that includes a thermally cross-linkable group and one olefinic double bond per molecule or a cross-linkable monomer that includes two or more olefinic double bonds per molecule may be used.

The thermally cross-linkable group may be an epoxy group, an N-methylolamide group, an oxetanyl group, an oxazoline group, or a combination thereof, for example. Of these thermally cross-linkable groups, an epoxy group is preferable in terms of ease of cross-linking and cross-link density adjustment.

Examples of cross-linkable monomers including an epoxy group as a thermally cross-linkable group and also including an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of cross-linkable monomers including an N-methylolamide group as a thermally cross-linkable group and also including an olefinic double bond include (meth)acrylamides including a methylol group such as N-methylol (meth)acrylamide.

Examples of cross-linkable monomers including an oxetanyl group as a thermally cross-linkable group and also including an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of cross-linkable monomers including an oxazoline group as a thermally cross-linkable group and also including an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of cross-linkable monomers including two or more olefinic double bonds per molecule include allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl and vinyl ethers of polyfunctional alcohols other than those previously listed, triallylamine, methylenebisacrylamide, and divinylbenzene.

Note that in the present disclosure, "(meth)acrylate" indicates "acrylate" and/or "methacrylate".

One cross-linkable monomer may be used individually, or a plurality of cross-linkable monomers may be used in combination.

### [Aromatic vinyl monomer unit]

Examples of aromatic vinyl monomers that can form an aromatic vinyl monomer unit in the particulate binder include aromatic monovinyl compounds such as styrene, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers can be used individually, or two or more of these aromatic vinyl monomers can be used in combination, it is preferable that one of these aromatic vinyl monomers is used individually.

### [Other monomer units]

Examples of other monomer units that can be further included in the particulate polymer include, but are not specifically limited to, a hydrophilic monomer unit that does not include an acidic group.

### -Hydrophilic monomer unit not including acidic group-

The particulate polymer preferably further includes a hydrophilic monomer unit that does not include an acidic group as another monomer unit. The further inclusion of a hydrophilic monomer unit that does not include an acidic group in the particulate polymer enables reduction of tack strength of the binder composition.

Examples of hydrophilic monomers not including an acidic group that can form a hydrophilic monomer unit not including an acidic group in the particulate polymer include hydroxyl group-containing monomers; nitrile group-containing monomers such as (meth)acrylonitrile; and polyalkylene oxide structure-containing monomers. One of these hydrophilic monomers not including an acidic group may be used individually, or two or more of these hydrophilic monomers not including an acidic group may be used in combination in a freely selected ratio.

Note that in the present disclosure, "(meth)acryl" indicates "acryl" and/or "methacryl", and "(meth)acrylonitrile" indicates "acrylonitrile" and/or "methacrylonitrile".

Examples of hydroxyl group-containing monomers include ethylenically unsaturated alcohols such as (meth)allyl alcohol, 3-buten-1-ol, and 5-hexen-1-ol; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

One hydroxyl group-containing monomer may be used individually, or two or more hydroxyl group-containing monomers may be used in combination in a freely selected ratio.

A polyethylene oxide structure-containing monomer represented by formula (I): CH₂=CR¹-COO-(CH₂CH₂O)ₙ-R² (where R¹ represents a hydrogen atom or a methyl group, R² represents an alkyl group having a carbon number of not less than 1 and not more than 5, and n represents an integer of 5 or more) can, for example, be used as a polyalkylene oxide structure-containing monomer.

The carbon number of the alkyl group constituting R² in formula (I) is preferably 3 or less, more preferably 2 or less, and even more preferably 1.

Moreover, n in formula (I) is preferably 7 or more, and preferably 9 or more, and is preferably 25 or less, and more preferably 15 or less.

Examples include polyethylene oxide structure-containing monomers such as AM-90G, AM-130G, M-90G, and M-230G (product names) produced by Shin-Nakamura Chemical Co., Ltd. One of these polyethylene oxide structure-containing monomers can be used individually, or two or more of these polyethylene oxide structure-containing monomers can be used in combination.

From a viewpoint of suppressing foaming of a slurry composition that contains the binder composition while also further reducing tack strength of the binder composition, it is preferable to use acrylonitrile as a hydrophilic monomer not including an acidic group.

The solubility in water of the hydrophilic monomer not including an acidic group is preferably 10,000 mg/L or more, more preferably 12,000 mg/L or more, and even more preferably 14,000 mg/L or more, and is preferably 2,000,000 mg/L or less, and more preferably 1,900,000 mg/L or less. When the solubility in water of the hydrophilic monomer not including an acidic group is not less than any of the lower limits set forth above, tack strength of the binder composition can be further reduced. On the other hand, when the solubility in water of the hydrophilic monomer not including an acidic group is not more than any of the upper limits set forth above, foaming of a slurry composition that contains the binder composition can be suppressed.

Note that the "solubility in water" referred to in the present disclosure means the solubility in water at 25°C.

When the amount of all repeating units (monomer units) in all polymers forming the particulate binder is taken to be 100 mass%, the proportional content of (meth)acrylic acid ester monomer units in all polymers forming the particulate binder is preferably 50 mass% or more, more preferably 60 mass% or more, and even more preferably 70 mass% or more, and is preferably 90 mass% or less, more preferably 80 mass% or less, and even more preferably 77 mass% or less.

When the amount of all repeating units (monomer units) in all polymers forming the particulate binder is taken to be 100 mass%, the proportional content of acidic functional group-containing monomer units in all polymers forming the particulate binder is preferably 0.5 mass% or more, more preferably 1 mass% or more, and even more preferably 2 mass% or more, and is preferably 20 mass% or less, more preferably 15 mass% or less, and even more preferably 8 mass% or less.

When the amount of all repeating units (monomer units) in all polymers forming the particulate binder is taken to be 100 mass%, the proportional content of unsaturated carboxylic acid amide monomer units in all polymers forming the particulate binder is preferably 0.1 mass% or more, more preferably 0.5 mass% or more, and even more preferably 1 mass% or more, and is preferably 10 mass% or less, more preferably 5 mass% or less, and even more preferably 3 mass% or less.

When the amount of all repeating units (monomer units) in all polymers forming the particulate binder is taken to be 100 mass%, the proportional content of cross-linkable monomer units in all polymers forming the particulate binder is preferably 0.1 mass% or more, more preferably 0.5 mass% or more, and even more preferably 1 mass% or more, and is preferably 10 mass% or less, more preferably 5 mass% or less, and even more preferably 2 mass% or less.

When the amount of all repeating units (monomer units) in all polymers forming the particulate binder is taken to be 100 mass%, the proportional content of aromatic vinyl monomer units in all polymers forming the particulate binder is preferably 1 mass% or more, more preferably 5 mass% or more, and even more preferably 10 mass% or more, and is preferably 30 mass% or less, more preferably 25 mass% or less, and even more preferably 20 mass% or less.

When the amount of all repeating units (monomer units) in all polymers forming the particulate binder is taken to be 100 mass%, the proportional content of other monomer units in all polymers forming the particulate binder is preferably 0.1 mass% or more, more preferably 0.5 mass% or more, and even more preferably 1 mass% or more, and is preferably 10 mass% or less, more preferably 5 mass% or less, and even more preferably 2 mass% or less.

### <<Average particle diameter>>

### [Average particle diameter Da measured by dynamic light scattering]

The average particle diameter Da of the particulate binder measured by dynamic light scattering can vary depending on the pH.

The average particle diameter Da_{(pH6.0)} of the particulate binder measured by dynamic light scattering at pH 6.0 is preferably 100 nm or more, more preferably 150 nm or more, and even more preferably 200 nm or more, and is preferably 3 µm or less, more preferably 1 µm or less, and even more preferably 600 nm or less.

The average particle diameter Da_{(pH8.0)} of the particulate binder measured by dynamic light scattering at pH 8.0 is preferably 100 nm or more, more preferably 150 nm or more, and even more preferably 200 nm or more, and is preferably 3 µm or less, more preferably 1 µm or less, and even more preferably 600 nm or less.

The value of the average particle diameter Da of the particulate binder measured by dynamic light scattering can be adjusted through the types and amounts of monomers used to form the particulate binder, the method and conditions of polymerization, the structure of the particulate binder, and so forth, for example.

Note that the average particle diameter Da of the particulate binder at each pH referred to in the present disclosure can be measured by the following method. First, the pH of a water dispersion (binder composition) containing the particulate binder is adjusted. The pH adjustment can be performed through addition of an acid (for example, hydrochloric acid, sulfuric acid, nitric acid, acetic acid, or citric acid) or a base (for example, sodium hydroxide, potassium hydroxide, or ammonia water), for example. Next, a particle size analyzer having dynamic light scattering as a measurement principle (produced by Otsuka Electronics Co., Ltd.; model: nanoSAQLA) is used to measure a particle size distribution of the pH-adjusted water dispersion (binder composition), and the particle diameter (D50) at which cumulative frequency of light scattering intensity calculated from a small diameter end in the measured particle size distribution reaches 50% is taken to be the average particle diameter Da. Note that the measurement conditions in the dynamic light scattering are as follows.
Dispersion medium: Deionized water
Measurement temperature: 25 ± 1°C
Measurement concentration (solid content concentration): 0.5 mass%
Scattering angle: 168.8°
Light source laser wavelength: 660 nm

### [Ratio of Da_{(pH8.0)}/Da_{(pH6.0)}]

A ratio Da_{(pH8.0)}/Da_{(pH6.0)} of the average particle diameter Da_{(pH8.0)} of the particulate binder measured by dynamic light scattering at pH 8.0 relative to the average particle diameter Da_{(pH6.0)} of the particulate binder measured by dynamic light scattering at pH 6.0 is required to be more than 1.10, is preferably 1.20 or more, and more preferably 1.50 or more, and is preferably 3.0 or less, more preferably 2.5 or less, and even more preferably 2.0 or less.

When the ratio of Da_{(pH8.0)}/Da_{(pH6.0)} is more than or not less than any of the lower limits set forth above, peel strength of an electrode that is formed using the binder composition can be sufficiently improved. Although it is not clear why peel strength of an electrode that is formed using the binder composition can be sufficiently improved when the ratio of Da_{(pH8.0)}/Da_{(pH6.0)} is not less than any of the lower limits set forth above, the reason for this is presumed to be as follows. Specifically, in a situation in which a slurry composition that contains a binder composition is applied onto a current collector and is dried to form an electrode mixed material layer in production of an electrode, it is thought that by using a binder composition containing a particulate binder having a ratio of Da_{(pH8.0)}/Da_{(pH6.0)} that is not less than any of the lower limits set forth above, it is possible to inhibit movement (migration) of the particulate binder to a surface-side of the electrode mixed material layer (i.e., an opposite side to a current collector-side). This results in good dispersion of the particulate binder in the electrode mixed material layer, and thereby enables sufficient improvement of peel strength of the electrode.

On the other hand, when the ratio of Da_{(pH8.0)}/Da_{(pH6.0)} is not more than any of the upper limits set forth above, good tackiness of the binder composition can be maintained by inhibiting an excessive increase of viscosity of the binder composition.

### [Volume-average particle diameter Db measured by laser diffraction/scattering]

The volume-average particle diameter Db of the particulate binder measured by laser diffraction/scattering is preferably 100 nm or more, more preferably 150 nm or more, and even more preferably 200 nm or more, and is preferably 3 µm or less, more preferably 1 µm or less, and even more preferably 600 nm or less. When the volume-average particle diameter Db of the particulate binder measured by laser diffraction/scattering is within any of the specific ranges set forth above, peel strength of an electrode that is formed using the binder composition can be sufficiently improved. When the volume-average particle diameter Db of the particulate binder measured by laser diffraction/scattering is not less than any of the lower limits set forth above, electrolyte solution injectability of a secondary battery that includes an electrode formed using the binder composition can be improved, and internal resistance of the secondary battery can also be reduced.

The value of the volume-average particle diameter Db of the particulate binder measured by laser diffraction/scattering can be adjusted through the types and amounts of monomers used to form particles located at an inner side of a surface layer portion in the particulate binder, the conditions of polymerization, and so forth, for example.

### [Ratio of Da/Db]

A ratio Da_{(pH6.0)}/Db of the average particle diameter Da_{(pH6.0)} of the particulate binder measured by dynamic light scattering at pH 6.0 relative to the volume-average particle diameter Db of the particulate binder measured by laser diffraction/scattering is preferably 0.8 or more, more preferably 0.85 or more, and even more preferably 0.9 or more, and is preferably 1.5 or less, more preferably 1.2 or less, and even more preferably 1.2 or less.

A ratio Da_{(pH8.0)}/Db of the average particle diameter Da_{(pH8.0)} of the particulate binder measured by dynamic light scattering at pH 8.0 relative to the volume-average particle diameter Db of the particulate binder measured by laser diffraction/scattering is preferably 1.1 or more, more preferably 1.2 or more, and even more preferably 1.5 or more, and is preferably 3.0 or less, more preferably 2.5 or less, and even more preferably 2.0 or less.

When the ratio of Da_{(pH6.0)}/Db and the ratio of Da_{(pH8.0)}/Db are not less than any of the lower limits set forth above, peel strength of an electrode that is formed using the binder composition can be sufficiently improved. Although it is not clear why peel strength of an electrode that is formed using the binder composition can be sufficiently improved when the ratio of Da_{(pH6.0)}/Db and the ratio of Da_{(pH8.0)}/Db are not less than any of the lower limits set forth above, the reason for this is presumed to be as follows. Specifically, in a situation in which a slurry composition that contains a binder composition is applied onto a current collector and is dried to form an electrode mixed material layer in production of an electrode, it is thought that by using a binder composition containing a particulate binder having a ratio of Da_{(pH6.0)}/Db and a ratio of Da_{(pH8.0)}/Db that are not less than any of the lower limits set forth above, it is possible to inhibit movement (migration) of the particulate binder to a surface-side of the electrode mixed material layer (i.e., an opposite side to a current collector-side). This results in good dispersion of the particulate binder in the electrode mixed material layer, and thereby enables sufficient improvement of peel strength of the electrode.

On the other hand, when the ratio of Da_{(pH6.0)}/Db and the ratio of Da_{(pH8.0)}/Db are not more than any of the upper limits set forth above, good tackiness of the binder composition can be maintained by inhibiting an excessive increase of viscosity of the binder composition.

### <Properties of binder composition for non-aqueous secondary battery electrode>

### <<pH>>

The pH of the binder composition for a non-aqueous secondary battery electrode (pH of the aqueous phase) is preferably 6 or higher, and more preferably 7 or higher, and is preferably 10 or lower, more preferably 9 or lower, and even more preferably 8 or lower. When the pH of the binder composition is not lower than any of the lower limits set forth above, peel strength of an electrode that is formed using the binder composition can be further improved. On the other hand, when the pH of the binder composition is not higher than any of the upper limits set forth above, good tackiness of the binder composition can be maintained by inhibiting an excessive increase of viscosity of the binder composition.

Note that pH adjustment may be performed through addition of an alkali to the aqueous phase. The alkali may be lithium hydroxide, sodium hydroxide, potassium hydroxide, or ammonia water, with ammonia water being preferable because there is a low tendency for aggregates to form due to addition shock during alkali neutralization.

### <Components that can be contained in binder composition for non-aqueous secondary battery electrode>

The binder composition for a non-aqueous secondary battery electrode may contain an acidic water-soluble polymer, an antioxidant, a preservative, a defoamer, and so forth in the aqueous phase. Moreover, the presently disclosed binder composition may contain a binder other than the particulate binder including the polymer (A) that was described above (i.e., another binder). For example, a water-insoluble polymer or a particulate polymer can be used as another binder.

### <<Acidic water-soluble polymer>>

The acidic water-soluble polymer that can be contained in the aqueous phase of the binder composition for a non-aqueous secondary battery electrode may, for example, be produced through polymerization as a side product, during production of the particulate binder through polymerization, from monomer(s) that serves as a raw material of the particulate binder. Such an acidic water-soluble polymer may be a polymer that includes a carboxyl group-containing monomer unit and that optionally further includes an aromatic vinyl monomer unit and an aliphatic conjugated diene monomer unit, for example. Monomers that were previously described in the "Particulate binder" section can be used as monomers that can form various monomer units that can be included in the acidic water-soluble polymer, such as a carboxyl group-containing monomer unit, an aromatic vinyl monomer unit, and an aliphatic conjugated diene monomer unit.

The weight-average molecular weight of such an acidic water-soluble polymer is preferably 500 or more, more preferably 700 or more, and even more preferably 1,000 or more, and is preferably 20,000 or less, more preferably 15,000 or less, even more preferably 8,000 or less, further preferably 3,500 or less, and even further preferably 2,000 or less. When the weight-average molecular weight of the acidic water-soluble polymer is not less than any of the lower limits set forth above, peel strength of an electrode that is formed using the binder composition can be further improved. On the other hand, when the weight-average molecular weight of the acidic water-soluble polymer is not more than any of the upper limits set forth above, good tackiness of the binder composition can be maintained by inhibiting an excessive increase of viscosity of the binder composition.

Note that the acidic water-soluble polymer may be in the form of a salt (salt of an acidic water-soluble polymer). In other words, the term "acidic water-soluble polymer" as used in the present disclosure also encompasses salts of that acidic water-soluble polymer. Also note that when a polymer is said to be "water-soluble" in the present disclosure, this means that when 0.5 g of the polymer is dissolved in 100 g of water at a temperature of 25°C, insoluble content is less than 1.0 mass%.

### <<Antioxidant>>

The antioxidant may be a hindered phenol antioxidant (for example, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], or 2,4,6-tris(3',5'-di-tert-butyl-4'-hydroxybenzyl)mesitylene), an oligomeric phenolic antioxidant (for example, WINGSTAY L), a phosphite antioxidant (for example, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, or tris(2,4-di-tert-butylphenyl) phosphite), a sulfuric antioxidant (for example, didodecyl 3,3'-thiodipropionate), or the like.

The additive amount of the antioxidant is preferably 0.1 parts by mass or more, and more preferably 1 part by mass or more relative to 100 parts by mass of the particulate binder, and is preferably 10 parts by mass or less, and more preferably 5 parts by mass or less relative to 100 parts by mass of the particulate binder.

### <<Preservative>>

The preservative may be a known preservative such as an isothiazoline compound or 2-bromo-2-nitro-1,3-propanediol, for example. The isothiazoline compound may be any of those described in JP2013-211246A, JP2005-097474A, JP2013-206624A, etc. without any specific limitations. Note that one preservative may be used individually, or two or more preservatives may be used in combination. Moreover, 1,2-benzisothiazolin-3-one, 2-methyl-4-isothiazolin-3-one, 5-chloro-2-methyl-4-isothiazolin-3-one, and 2-bromo-2-nitro-1,3-propanediol are preferable, and 1,2-benzisothiazolin-3-one is more preferable as the preservative.

The amount of the preservative that is contained in the binder composition is preferably 0.01 parts by mass or more relative to 100 parts by mass of the particulate binder, and is preferably 0.5 parts by mass or less, more preferably 0.4 parts by mass or less, and even more preferably 0.3 parts by mass or less relative to 100 parts by mass of the particulate binder. Formation of aggregates in the binder composition after long-term storage can be even further inhibited when the content of the preservative is 0.01 parts by mass or more per 100 parts by mass of the particulate binder, whereas sufficiently high peel strength of an electrode can be ensured when the content of the preservative is 0.5 parts by mass or less per 100 parts by mass of the particulate binder.

### <Production method of binder composition>

The presently disclosed binder composition for a non-aqueous secondary battery electrode can be produced through polymerization of monomers serving as a basis for structural units included in the particulate binder ((meth)acrylic acid ester monomer unit, acidic functional group-containing monomer unit, unsaturated carboxylic acid amide monomer unit, cross-linkable monomer unit, aromatic vinyl monomer unit, and other monomer units) in an emulsion. This production method may be a batch emulsion polymerization method, an emulsion (Em) prop method, or a seeded polymerization method, for example.

The batch emulsion polymerization method may be performed by the following procedure, for example. Monomers serving as a basis for monomer units included in the particulate binder ((meth)acrylic acid ester monomer unit, acidic functional group-containing monomer unit, unsaturated carboxylic acid amide monomer unit, cross-linkable monomer unit, aromatic vinyl monomer unit, and other monomer units) are mixed with water, an emulsifier, and a polymerization initiator. The mixture (emulsion) is then heated to perform a polymerization reaction. At the point at which a specific polymerization conversion rate is reached, cooling is performed to quench the reaction to yield a mixture containing a particulate binder. Unreacted monomer is removed from the mixture. The pH of this mixture is adjusted to within any of the previously described preferable pH ranges for the aqueous phase, and the previously described additives (for example, an antioxidant) are optionally added to obtain a water dispersion as a binder composition for a non-aqueous secondary battery electrode. Heating during the polymerization reaction may be performed to 40°C or higher, 45°C or higher, 50°C or higher, 55°C or higher, or 60°C or higher, for example, and may be performed to 90°C or lower, 85°C or lower, 80°C or lower, 75°C or lower, or 70°C or lower, for example. Removal of unreacted monomer from the mixture may be performed through thermal-vacuum distillation or through blowing in of steam, for example.

The Em prop method may be performed by the following procedure, for example. Monomers for core portion formation (monomer units included in the polymer (A) such as a (meth)acrylic acid ester monomer unit and optionally an acidic functional group-containing monomer unit, an unsaturated carboxylic acid amide monomer unit, an unsaturated carboxylic acid epoxy monomer unit, a cross-linkable monomer unit, and other monomer units) are mixed with water, an emulsifier, a polymerization initiator, and optionally a chain transfer agent. The mixture (emulsion) is heated and a polymerization reaction is performed until a specific polymerization conversion rate is reached to yield a mixture containing a seed particle polymer as a core portion. Next, monomers for shell portion formation (monomer units included in the polymer (C) such as an aromatic vinyl monomer and optionally monomer units other than an aromatic vinyl monomer unit) and optionally an emulsifier and water are continuously added to the mixture, and polymerization is continued. Next, monomers for surface layer portion formation (monomer units included in the polymer (B) such as an acidic functional group-containing monomer unit and optionally monomer units other than an acidic functional group-containing monomer unit) and optionally an emulsifier and water are then continuously added to the mixture, and polymerization is continued. At the point at which a specific polymerization conversion rate is reached, cooling is performed to quench the reaction to yield a mixture containing a particulate binder. Unreacted monomer is removed from the mixture. The pH of this mixture is adjusted to within any of the previously described preferable pH ranges for the aqueous phase, and the previously described additives (for example, an antioxidant) are optionally added to obtain a water dispersion as a binder composition for a non-aqueous secondary battery electrode containing a particulate binder that includes a core-shell structure and a surface layer portion.

In the seeded polymerization, monomer units included in the polymer (A), water, an emulsifier, a polymerization initiator, and optionally a chain transfer agent are mixed with a seed particle polymer that is formed of a polymer including one or more monomer units among monomer units included in the polymer (A), such as a (meth)acrylic acid ester monomer unit and optionally an acidic functional group-containing monomer unit, an unsaturated carboxylic acid amide monomer unit, an unsaturated carboxylic acid epoxy monomer unit, a cross-linkable monomer unit, and other monomer units, and then a polymerization reaction, etc. are performed in the same manner as described above to obtain a mixture containing a seed particle polymer as a core portion. Next, monomers for shell portion formation (monomer units included in the polymer (C) such as an aromatic vinyl monomer and optionally monomer units other than an aromatic vinyl monomer unit) and optionally an emulsifier and water are continuously added to the mixture, and polymerization is continued. Next, monomers for surface layer portion formation (monomer units included in the polymer (B) such as an acidic functional group-containing monomer unit and optionally monomer units other than an acidic functional group-containing monomer unit) and optionally an emulsifier and water are then continuously added to the mixture, and polymerization is continued. At the point at which a specific polymerization conversion rate is reached, cooling is performed to quench the reaction to yield a mixture containing a particulate binder. Unreacted monomer is removed from the mixture. The pH of this mixture is adjusted to within any of the previously described preferable pH ranges for the aqueous phase, and the previously described additives (for example, an antioxidant) are optionally added to obtain a water dispersion as a binder composition for a non-aqueous secondary battery electrode containing a particulate binder that includes a core-shell structure and a surface layer portion.

In a case in which the particulate binder has a structure including the polymer (B) in a surface layer portion, the binder composition may be produced by the following procedure including two or more stages of polymerization, for example. Monomers for polymer (A) formation are mixed with water, an emulsifier, a chain transfer agent, and a polymerization initiator. The mixture is heated, and a polymerization reaction is performed until a specific polymerization conversion rate is reached to form a particle polymer formed of the polymer (A). Next, monomers for polymer (B) formation and optionally an emulsifier and water are continuously added to the reaction liquid, and polymerization is continued. At the point at which a specific polymerization conversion rate is reached, cooling is performed to quench the reaction to yield a mixture containing a particulate binder. Unreacted monomer is removed from the mixture. The pH of this mixture is adjusted to within any of the previously described preferable pH ranges, and the previously described additives (for example, an antioxidant) are optionally added to obtain a binder composition for a non-aqueous secondary battery electrode that contains water and a particulate binder having a structure including the polymer (B) in a surface layer portion.

In a case in which the particulate binder includes the polymer (B) in a surface layer portion and also has a core-shell structure including a core portion that contains the polymer (A) and shell portion that contains the polymer (C), the binder composition may be produced by the following procedure including three or more stages of polymerization, for example.

First, as a first stage of polymerization, monomers for polymer (A) formation are mixed with water, an emulsifier, a chain transfer agent, and a polymerization initiator. The mixture is heated, and a polymerization reaction is performed until a specific polymerization conversion rate is reached to form a particle polymer formed of the polymer (A).

Next, as a second stage of polymerization, monomers for polymer (C) formation and optionally an emulsifier and water are continuously added to the reaction liquid, and polymerization is continued. At the point at which a specific polymerization conversion rate is reached, cooling is performed to quench the reaction to form a binder composition for a non-aqueous secondary battery electrode containing water and a particulate binder having a core-shell structure including a core portion that contains the polymer (A) and a shell portion that contains the polymer (C).

Next, as a third stage of polymerization, monomers for polymer (B) formation and optionally an emulsifier and water are continuously added to the reaction liquid, and polymerization is continued. Unreacted monomer may be removed from the reaction liquid after each stage of polymerization. The pH of the reaction liquid after the reaction is adjusted to within any of the previously described preferable pH ranges, and the previously described additives (for example, an antioxidant) are optionally added to obtain a binder composition for a non-aqueous secondary battery electrode that contains water and a particulate binder including the polymer (B) in a surface layer portion and also having a core-shell structure including a core portion that contains the polymer (A) and a shell portion that contains the polymer (C).

The emulsifier used in production of the binder composition may be an alkyl diphenyl ether disulfonic acid, dodecylbenzenesulfonic acid, lauryl sulfuric acid, or a salt (for example, a potassium salt or a sodium salt) of any thereof, for example. The additive amount of the emulsifier is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

The polymerization initiator used in production of the binder composition may be potassium persulfate, n-butyllithium, or ammonium persulfate, for example. The additive amount of the polymerization initiator is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

The chain transfer agent used in production of the binder composition may be α-methylstyrene dimer, tert-dodecyl mercaptan, or 3-mercapto-1,2-propanediol, for example. The additive amount of the chain transfer agent is preferably 0.1 parts by mass or more, and more preferably 0.2 parts by mass or more relative to 100 parts by mass of the total amount of monomer units in polymers forming the particulate binder, and is preferably 10 parts by mass or less, and more preferably 5 parts by mass or less relative to 100 parts by mass of the total amount of monomer units in polymers forming the particulate binder.

### <Tackiness of binder composition>

The presently disclosed binder composition set forth above has good tackiness.

A lower tack strength results in better productivity without the occurrence of adhesion to a dryer or the like during formation of an electrode mixed material layer. (Note that high tack strength is undesirable not only due to the start of strong adhesion to a wall of a dryer, a conveyer, or the like and reduction of production efficiency, but also because problems such as the inability to achieve uniform quality arise.) Moreover, lower tack strength results in lower adhesiveness to a roll during processing using a roll, and can be judged to indicate better roll processability.

Good tackiness means that there is a tack strength (N) of 8 N or less, and preferably 4 N or less when a probe made of SUS is used to perform a pressing operation with respect to one side of a film formed through drying of the binder composition under conditions of a pressing speed of 3 mm/s, a pressing load of 100 gf, and a pressing holding time of 1 s, and then the SUS probe is pulled upward with a pulling speed of 3 mm/s.

Note that the tack strength of the binder composition referred to in the present disclosure can be measured by a method described in the EXAMPLES section of the present specification.

### (Slurry composition for non-aqueous secondary battery electrode)

The presently disclosed slurry composition is a composition that is used in an application of forming an electrode mixed material layer of an electrode. The presently disclosed slurry composition contains the presently disclosed binder composition and an electrode active material and may optionally further contain components other than the aforementioned components (hereinafter, referred to as "other components"). Moreover, the presently disclosed slurry composition has good tackiness as a slurry composition and enables formation of an electrode having excellent peel strength as a result of containing the binder composition set forth above. Furthermore, by using an electrode having excellent peel strength that has been formed using the presently disclosed slurry composition, it is possible to cause a secondary battery to display excellent performance. For example, it is possible to improve battery characteristics such as cycle characteristics and also to reduce internal resistance of the secondary battery.

### <Amount of binder composition>

No specific limitations are placed on the amount of the binder composition in the slurry composition. For example, the amount of the binder composition can be set as an amount such that, in terms of solid content, the amount of the particulate binder is not less than 0.5 parts by mass and not more than 15 parts by mass per 100 parts by mass of the electrode active material.

### <Electrode active material>

Any known electrode active material that is used in secondary batteries can be adopted as the electrode active material without any specific limitations. Specifically, any of the following electrode active materials can be used without any specific limitations as an electrode active material that can be used in an electrode mixed material layer of a lithium ion secondary battery, which is one example of a secondary battery, for example.

### [Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Note that the transition metal may be Ti, V, Cr, Mn, Fe, Co, Ni, Cu, Mo, or the like, for example.

Specific examples of positive electrode active materials include, but are not specifically limited to, lithium-containing cobalt oxide (LiCoO₂), lithium manganate (LiMn₂O₄), lithium-containing nickel oxide (LiNiO₂), lithium-containing complex oxides of Co-Ni-Mn, lithium-containing complex oxides of Ni-Mn-Al, lithium-containing complex oxides of Ni-Co-Al, olivine-type lithium iron phosphate (LiFePO₄), olivine-type lithium manganese phosphate (LiMnPO₄), lithium-rich spinel compounds represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

Note that one of the above-described positive electrode active materials may be used individually, or two or more of the above-described positive electrode active materials may be used in combination.

### [Negative electrode active material]

A negative electrode active material that is compounded in a negative electrode mixed material layer of a negative electrode in a lithium ion secondary battery may be a carbon-based negative electrode active material, a metal-based negative electrode active material, a negative electrode active material that is a combination thereof, or the like, for example.

The carbon-based negative electrode active material can be defined as an active material that contains carbon as its main framework and into which lithium can be inserted (also referred to as "doping"). The carbon-based negative electrode active material may, more specifically, be a carbonaceous material such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), or hard carbon; or a graphitic material such as natural graphite or artificial graphite.

The metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

Of these metal-based negative electrode active materials, active materials containing silicon (silicon-based negative electrode active materials) are preferred. One reason for this is that the capacity of a lithium ion secondary battery can be increased through use of a silicon-based negative electrode active material.

The silicon-based negative electrode active material may be silicon (Si), an alloy of silicon with cobalt, nickel, iron, or the like, SiOₓ, a mixture of a Si-containing material and a carbon material, or a composite of a Si-containing material and conductive carbon obtained by coating or combining the Si-containing material with the conductive carbon, for example.

SiOₓ is a compound that includes Si and at least one of SiO and SiO₂, where x is normally not less than 0.01 and less than 2. SiOₓ can, for example, be formed by utilizing a disproportionation reaction of silicon monoxide (SiO). Specifically, SiOₓ can be prepared by heat-treating SiO, optionally in the presence of a polymer such as polyvinyl alcohol, to produce silicon and silicon dioxide. The heat treatment can be performed in an inert gas atmosphere after SiO is optionally pulverized and mixed with the polymer.

The mixture of a Si-containing material and a carbon material may be a mixture obtained by pulverizing and mixing a Si-containing material such as silicon or SiOₓ with a carbon material such as a carbonaceous material or a graphitic material, optionally in the presence of a polymer such as polyvinyl alcohol. Any of the materials that can be used as a carbon-based negative electrode active material may be used as the carbonaceous material or graphitic material.

The composite of a Si-containing material and conductive carbon may, for example, be a compound obtained by heat-treating a pulverized mixture of SiO, a polymer such as polyvinyl alcohol, and optionally a carbon material in an inert gas atmosphere, for example. In a situation in which a high temperature is adopted in the heat treatment of the pulverized mixture, this produces a composite (Si-SiOₓ-C composite) in which SiOₓ produced through a disproportionation reaction of SiO is dispersed in a matrix of conductive carbon formed of the carbonized polymer and the optionally compounded carbon material. Moreover, in a situation in which a comparatively low temperature is adopted in the heat treatment of the pulverized mixture, this produces a composite (SiO-C) in which Si in SiO has been partially replaced by conductive carbon.

Note that one of the above-described negative electrode active materials may be used individually, or two or more of the above-described negative electrode active materials may be used in combination.

### <Other components>

Examples of other components that can be compounded in the slurry composition include, but are not specifically limited to, dispersants, viscosity modifiers (thickeners), phosphite antioxidants, metal scavengers, and conductive materials. One other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of an aqueous phase (aqueous medium) that is typically contained in the binder composition.

No specific limitations are placed on the mixing method, and mixing can be performed using any stirrer or disperser that can normally be used.

### (Electrode for non-aqueous secondary battery)

The presently disclosed electrode for a non-aqueous secondary battery includes an electrode mixed material layer formed using the slurry composition for a non-aqueous secondary battery electrode set forth above. Accordingly, the electrode mixed material layer is formed of a dried product of the slurry composition set forth above, normally contains an electrode active material and a component derived from a particulate binder, and optionally further contains other components. Components contained in the electrode mixed material layer are components that were contained in the slurry composition for a non-aqueous secondary battery electrode set forth above, and the preferred ratio of these components is the same as the preferred ratio of the components in the slurry composition. Moreover, although the particulate binder is present in a particulate form in the slurry composition, the particulate binder may have a particulate form or may have any other form in the electrode mixed material layer that is formed using the slurry composition.

The presently disclosed electrode for a non-aqueous secondary battery has excellent peel strength as a result of the electrode mixed material layer being formed using the slurry composition for a non-aqueous secondary battery electrode set forth above. Consequently, a non-aqueous secondary battery that includes the presently disclosed electrode for a non-aqueous secondary battery can display excellent performance. For example, the non-aqueous secondary battery has excellent battery characteristics such as cycle characteristics and also has reduced internal resistance.

### <Production of electrode for non-aqueous secondary battery>

The electrode mixed material layer of the presently disclosed electrode for a non-aqueous secondary battery can be formed using any of the following methods, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

Note that by using the presently disclosed slurry composition, it is possible to cause a formed electrode to display excellent peel strength even in a situation in which the electrode is produced through high-speed application of the slurry composition onto the current collector, and thus the slurry composition can be used in high-speed coating.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer. Note that by using the presently disclosed slurry composition, it is possible to cause a formed electrode to display excellent peel strength even in a situation in which the electrode is produced through high-speed drying of the slurry composition that has been applied onto the current collector.

After the drying step, the electrode mixed material layer may be further subjected to a pressing process, such as mold pressing or roll pressing. This pressing process can improve close adherence between the electrode mixed material layer and the current collector and also enables densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, wherein the electrode for a non-aqueous secondary battery set forth above is used as at least one of the positive electrode and the negative electrode. Moreover, the presently disclosed non-aqueous secondary battery can display excellent performance (for example, has excellent battery characteristics such as cycle characteristics and reduced internal resistance) as a result of being produced by using the electrode for a non-aqueous secondary battery set forth above as at least one of the positive electrode and the negative electrode.

Although the following describes, as one example, a case in which the secondary battery is a lithium ion secondary battery, the presently disclosed secondary battery is not limited to the following example.

### <Electrodes>

Known electrodes that are used in production of secondary batteries can be used without any specific limitations in the presently disclosed non-aqueous secondary battery as an electrode other than the presently disclosed electrode for a non-aqueous secondary battery set forth above. Specifically, an electrode obtained by forming an electrode mixed material layer on a current collector by a known production method can be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device, an expanded metal, or a lead plate, as necessary, in order to prevent pressure increase inside the secondary battery and occurrence of overcharging or overdischarging. The shape of the secondary battery may be a coin type, button type, sheet type, cylinder type, prismatic type, or flat type, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the examples and comparative examples, the following methods were used to measure and evaluate the average particle diameter Da of a particulate binder measured by dynamic light scattering, the volume-average particle diameter Db of a particulate binder measured by laser diffraction/scattering, the viscosity and tackiness of a binder composition, the peel strength of a negative electrode, and the internal resistance and cycle characteristics of a lithium ion secondary battery.

### (Measurement and evaluation methods)

### <Average particle diameter Da of particulate binder measured by dynamic light scattering>

A binder composition was adjusted to a pH of 6.0 or 8.0 through addition of hydrochloric acid or sodium hydroxide as necessary. A particle size analyzer having dynamic light scattering as a measurement principle (produced by Otsuka Electronics Co., Ltd.; model: nanoSAQLA) was used to measure a particle size distribution (by volume) of the pH-adjusted binder composition (water dispersion of a particulate binder) that was obtained as described above, and the particle diameter (D50) at which cumulative frequency of light scattering intensity calculated from a small diameter end in the measured particle size distribution reached 50% was taken to be the average particle diameter Da. Note that the measurement conditions in dynamic light scattering were as follows.
Dispersion medium: Deionized water
Measurement temperature: 25 ± 1°C
Measurement concentration (solid content concentration): 0.5 mass%
Scattering angle: 168.8°
Light source laser wavelength: 660 nm

### <Volume-average particle diameter Db of particulate binder measured by laser diffraction/scattering>

A particle size analyzer having laser diffraction/scattering as a measurement principle (Beckman Coulter, Inc.; product name: LS13 320 XR) was used to measure a particle size distribution (by volume) of an obtained binder composition (water dispersion of a particulate binder), and the particle diameter (D50) at which cumulative volume calculated from a small diameter end in the measured particle size distribution reached 50% was taken to be the average particle diameter Db.

### <Viscosity of binder composition>

An obtained binder composition was adjusted to a solid content concentration of 30 mass% through addition of water or removal of water by concentrating and was adjusted to a pH of 6.0 or 8.0 through addition of hydrochloric acid or sodium hydroxide as necessary. Thereafter, the viscosity of the binder composition was measured using a B-type viscometer (produced by Toki Sangyo Co., Ltd.; product name: TVB-10; rotation speed: 60 rpm). The temperature during viscosity measurement was 25°C.

### <Tackiness of binder composition>

A binder composition was applied onto copper foil such as to have a film thickness after drying of 5 µm and was dried at 110°C for 5 minutes to produce a binder film. The produced film was cut to dimensions of 30 mm × 20 mm to obtain a test specimen. A probe made of SUS (Ø10 mm) was used to perform a pressing operation with respect to one side of the test specimen under conditions of a pressing speed of 3 mm/s, a pressing load of 100 gf, and a pressing holding time of 1 s. Next, the tack strength (N) when the SUS probe was pulled upward with a pulling speed of 3 mm/s was measured and was evaluated by the following standard. A lower tack strength results in better productivity without the occurrence of adhesion to a dryer or the like. (Note that high tack strength is undesirable not only due to the start of strong adhesion to a wall of a dryer, a conveyer, or the like and reduction of production efficiency, but also because problems such as the inability to achieve uniform quality arise.) Moreover, lower tack strength results in lower adhesiveness to a roll during processing using a roll, and can be judged to indicate better roll processability.
A: Tack strength of 4 N or less
B: Tack strength of more than 4 N and not more than 8 N
C: Tack strength of more than 8 N

### <Peel strength of negative electrode>

A produced negative electrode was cut out as a rectangle of 100 mm in length by 10 mm in width to obtain a test specimen. This test specimen was placed with the surface of the negative electrode mixed material layer facing downward, and cellophane tape was affixed to the surface of the negative electrode mixed material layer. Tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner, an average value of the measurements was determined, and this average value was taken to be the peel strength and was evaluated by the following standard.
A: Peel strength of 10 N/m or more
B: Peel strength of not less than 7 N/m and less than 10 N/m
C: Peel strength of less than 7 N/m

### <Internal resistance of lithium ion secondary battery>

IV resistance was measured as follows in order to evaluate internal resistance of a lithium ion secondary battery. Conditioning was performed through three repetitions of an operation of charging to a voltage of 4.2 V with a charge rate of 0.1C, resting for 10 minutes, and then constant current (CC) discharging to 3.0 V with a discharge rate of 0.1C at a temperature of 25°C. Thereafter, the lithium ion secondary battery was charged to 3.75 V at 1C (C is a value expressed by rated capacity (mA)/1 hour (h)) in a -10°C atmosphere and was then subjected to 20 seconds of charging and 20 seconds of discharging at each of 0.5C, 1.0C, 1.5C, and 2.0C, centered on 3.75 V. The battery voltage after 15 seconds at the charging side in each of these cases was plotted against the current value, and the gradient of this plot was determined as the IV resistance (Ω). The obtained IV resistance value (Ω) was evaluated by the following standard through comparison with the IV resistance in Comparative Example 7. Note that a smaller IV resistance value indicates that the secondary battery has lower internal resistance.
A: Not less than 80% and less than 85% relative to IV resistance in Comparative Example 7
B: Not less than 85% and less than 95% relative to IV resistance in Comparative Example 7
C: Not less than 95% and less than 105% relative to IV resistance in Comparative Example 7
D: 105% or more relative to IV resistance in Comparative Example 7

### <Cycle characteristics of lithium ion secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, constant current (CC) constant voltage (CV) charging (upper limit cell voltage 4.20 V) was performed by a 0.2C constant-current method, and then CC discharging to 3.00 V was performed by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 100^{th} cycle was defined as X2. The discharge capacity X1 and the discharge capacity X2 were used to determine a capacity change rate expressed by ΔC' = (X2/X1) × 100(%), which was then evaluated by the following standard. A larger value for the capacity change rate ΔC' indicates better cycle characteristics.
A: ΔC' of 93% or more
B: ΔC' of not less than 90% and less than 93%
C: ΔC' of not less than 87% and less than 90%
D: ΔC' of less than 87%

### (Example 1)

### <Production of binder composition>

First, in a first stage of polymerization, a reactor including a stirrer was charged with 79.5 parts of butyl acrylate as a (meth)acrylic acid ester monomer, 1.0 parts of methacrylic acid as an acidic functional group-containing monomer (ethylenically unsaturated carboxylic acid monomer), 1.5 parts of acrylonitrile as another monomer, 0.3 parts of sodium dodecylbenzenesulfonate as an emulsifier, 0.5 parts of ammonium persulfate as a polymerization initiator, and 300 parts of deionized water. These materials were thoroughly stirred, were then heated to 70°C, and a reaction was caused to proceed for 4 hours. Next, in a second stage of polymerization, 15.0 parts of styrene as an aromatic vinyl monomer was added into the polymerization system within an addition time of 1 hour. Once the addition was complete, heating was performed to 80°C, and the reaction was caused to proceed for 2 hours. Thereafter, in a third stage of polymerization, 3.0 parts of methacrylic acid as an acidic functional group-containing monomer (ethylenically unsaturated carboxylic acid monomer) was added, and a reaction was performed for a further 4 hours. A water dispersion containing a polymerization product that was obtained in this manner was cooled to 30°C or lower. The above yielded a water dispersion (binder composition for a lithium ion secondary battery negative electrode) containing water and a particulate binder having a structure containing a polymer formed in the third stage of polymerization in a surface layer portion of a core-shell particle having a core portion containing a polymer formed in the first stage of polymerization and a shell portion containing a polymer formed in the second stage of polymerization.

The obtained binder composition was used to measure or evaluate the average particle diameter Da of the particulate binder at pH 6.0 and pH 8.0 measured by dynamic light scattering, the volume-average particle diameter Db of the particulate binder measured by laser diffraction/scattering, and the tackiness of the binder composition. The results are shown in Table 1.

### <Production of slurry composition for non-aqueous secondary battery negative electrode>

A planetary mixer equipped with a disper blade was charged with 100 parts of artificial graphite (tap density: 0.85 g/cm³; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Daicel Corporation; product name: Daicel 2200) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.0 parts in terms of solid content of the binder composition produced as described above were added to the obtained mixed liquid, and the final solid content concentration was adjusted to 48%. A further 10 minutes of mixing was performed, and then defoaming was performed under reduced pressure to yield a slurry composition for a negative electrode having good fluidity.

### <Formation of negative electrode>

The obtained slurry composition for a negative electrode was applied onto copper foil of 15 µm in thickness serving as a current collector by a comma coater at a speed of 1.2 m/min (normal speed) such as to have a coating weight after drying of 10.5 mg/cm². The slurry composition for a negative electrode was dried by conveying the copper foil inside a 120°C oven for 1 minute and a 130°C oven for 1 minute at a speed of 1.2 m/min.

The resultant negative electrode web was rolled by roll pressing to obtain a negative electrode (negative electrode obtained at normal coating speed) having a negative electrode mixed material layer density of 1.70 g/cm³. The peel strength of the negative electrode was evaluated. The result is shown in Table 1. In addition, a negative electrode for a case in which production is performed by high-speed coating was obtained by performing the same operations as described above with the exception that the speed during application of the slurry composition onto the copper foil was changed from 1.2 m/min to 3.6 m/min (high speed), the conveyance speed during drying was changed from 1.2 m/min to 3.6 m/min, and the conveyance was for 20 seconds in a 120°C oven and for 20 seconds in a 150°C oven. The peel strength of the negative electrode when produced by high-speed coating was evaluated. The result is shown in Table 1.

### <Formation of positive electrode>

A slurry composition for a positive electrode was obtained by mixing 100 parts of LiCoO₂ having a median diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials in a planetary mixer.

The obtained slurry composition for a positive electrode was applied onto aluminum foil of 20 µm in thickness serving as a current collector by a comma coater such as to have a coating weight after drying of 23 mg/cm². The slurry composition for a positive electrode was dried by conveying the aluminum foil inside a 60°C oven for 2 minutes at a speed of 0.5 m/min. Thereafter, 2 minutes of heat treatment was performed at 120°C to obtain a positive electrode web. The positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The post-pressing positive electrode for a lithium ion secondary battery and the post-pressing negative electrode for a lithium ion secondary battery (negative electrode obtained at normal coating speed) that were produced as described above were arranged with a separator (polypropylene microporous membrane of 20 µm in thickness) therebetween in an order of "separator/positive electrode/separator/negative electrode" to obtain a laminate. Next, the laminate of electrodes and separators was wound around a core of 20 mm in diameter to obtain a roll including a positive electrode, a separator, and a negative electrode. The obtained roll was then compressed to a thickness of 4.5 mm from one direction at a speed of 10 mm/s to obtain a flattened roll. This flattened roll had an elliptical shape in plan view, and a ratio of the major axis and the minor axis thereof (major axis/minor axis) was 7.7. In addition, a non-aqueous electrolyte solution (LiPF₆ solution of 1.0 M in concentration; solvent: mixed solvent of ethylene carbonate (EC)/ethyl methyl carbonate (EMC) = 3/7 (mass ratio) having 2 volume% of vinylene carbonate (VC) added as an additive) was prepared.

Next, the flattened roll was housed inside a laminate case made of aluminum together with the non-aqueous electrolyte solution. After connecting a negative electrode lead and a positive electrode lead at specific locations, an opening of the laminate case was thermally sealed to produce a laminate-type lithium ion secondary battery as a non-aqueous secondary battery. Note that the obtained secondary battery had a pouch shape of 35 mm (width) × 48 mm (height) × 5 mm (thickness) and had a nominal capacity of 700 mAh.

The internal resistance and cycle characteristics of this lithium ion secondary battery were evaluated. The results are shown in Table 1.

### (Example 2)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the chemical composition of monomers used in the first stage of polymerization was changed to 78.0 parts of butyl acrylate as a (meth)acrylic acid ester monomer, 1.0 parts of methacrylic acid as an ethylenically unsaturated carboxylic acid monomer, 1.5 parts of N-methylolacrylamide as an unsaturated carboxylic acid amide monomer, and 1.5 parts of acrylonitrile as another monomer. The results are shown in Table 1.

### (Example 3)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the chemical composition of monomers used in the first stage of polymerization was changed to 78.0 parts of butyl acrylate as a (meth)acrylic acid ester monomer, 1.0 parts of methacrylic acid as an ethylenically unsaturated carboxylic acid monomer, 1.5 parts of allyl glycidyl ether as a cross-linkable monomer (unsaturated carboxylic acid epoxy monomer), and 1.5 parts of acrylonitrile as another monomer. The results are shown in Table 1.

### (Example 4)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the chemical composition of monomers used in the first stage of polymerization was changed to 76.5 parts of butyl acrylate as a (meth)acrylic acid ester monomer, 1.0 parts of methacrylic acid as an ethylenically unsaturated carboxylic acid monomer, 1.5 parts of N-methylolacrylamide as an unsaturated carboxylic acid amide monomer, 1.5 parts of allyl glycidyl ether as an unsaturated carboxylic acid epoxy monomer, and 1.5 parts of acrylonitrile as another monomer. The results are shown in Table 1.

### (Example 5)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of butyl acrylate as a (meth)acrylic acid ester monomer used in the first stage of polymerization was changed from 76.5 parts to 74.5 parts, and the additive amount of methacrylic acid as an ethylenically unsaturated carboxylic acid monomer used in the third stage of polymerization was changed from 3.0 parts to 5.0 parts. The results are shown in Table 1.

### (Example 6)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of butyl acrylate as a (meth)acrylic acid ester monomer used in the first stage of polymerization was changed from 59.5 parts to 75.5 parts, and the additive amount of methacrylic acid as an ethylenically unsaturated carboxylic acid monomer used in the third stage of polymerization was changed from 3.0 parts to 20.0 parts. The results are shown in Table 1.

### (Example 7)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of sodium dodecylbenzenesulfonate as an emulsifier used in the first stage of polymerization was changed from 0.3 parts to 0.9 parts. The results are shown in Table 1.

### (Example 8)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of butyl acrylate as a (meth)acrylic acid ester monomer used in the first stage of polymerization was changed from 76.5 parts to 91.5 parts, and the second stage of polymerization was not performed. The results are shown in Table 1.

### (Comparative Example 1)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the first stage of polymerization was performed with the chemical composition of monomers changed to 98.0 parts of butyl acrylate as a (meth)acrylic acid ester monomer, 1.0 parts of methacrylic acid as an ethylenically unsaturated carboxylic acid monomer, and 1.0 parts of acrylonitrile as another monomer, and the second stage of polymerization and third stage of polymerization were not performed. The results are shown in Table 1.

### (Comparative Example 2)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the first stage of polymerization was performed with the chemical composition of monomers changed to 96.0 parts of butyl acrylate as a (meth)acrylic acid ester monomer, 1.0 parts of methacrylic acid as an ethylenically unsaturated carboxylic acid monomer, 1.0 parts of N-methylolacrylamide as an unsaturated carboxylic acid amide monomer, 1.0 parts of allyl glycidyl ether as an unsaturated carboxylic acid epoxy monomer, and 1.0 parts of acrylonitrile as another monomer, and the second stage of polymerization and third stage of polymerization were not performed. The results are shown in Table 1.

### (Comparative Example 3)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the additive amount of butyl acrylate as a (meth)acrylic acid ester monomer used in the first stage of polymerization was changed from 79.5 parts to 82.5 parts, and the third stage of polymerization was not performed. The results are shown in Table 1.

### (Comparative Example 4)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of butyl acrylate as a (meth)acrylic acid ester monomer used in the first stage of polymerization was changed from 76.5 parts to 79.5 parts, and the third stage of polymerization was not performed. The results are shown in Table 1.

### (Comparative Example 5)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the additive amount of butyl acrylate as a (meth)acrylic acid ester monomer used in the first stage of polymerization was changed from 79.5 parts to 81.5 parts, 1.0 parts of methacrylic acid as an ethylenically unsaturated carboxylic acid monomer was supplementarily added with monomer added in the second stage of polymerization, and the third stage of polymerization was not performed. The results are shown in Table 1.

### (Comparative Example 6)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 4 with the exception that in production of the binder composition containing the particulate binder, the additive amount of butyl acrylate as a (meth)acrylic acid ester monomer in the first stage of polymerization was changed from 76.5 parts to 79.5 parts, the third stage of polymerization was not performed, and 5.0 parts of ARON T-50 (produced by Toagosei Co., Ltd.), which is a polycarboxylic acid, was supplementarily added after the polymerization reaction to yield the binder composition. The results are shown in Table 1.

### (Comparative Example 7)

A binder composition containing a particulate binder, a slurry composition for a non-aqueous secondary battery negative electrode, a negative electrode, a positive electrode, and a lithium ion secondary battery were each produced or prepared, and measurements and evaluations were performed in the same way as in Example 1 with the exception that in production of the binder composition containing the particulate binder, the first stage of polymerization was performed with the chemical composition of monomers changed to 43.5 parts of butyl acrylate as a (meth)acrylic acid ester monomer, 1.0 parts of methacrylic acid as an ethylenically unsaturated carboxylic acid monomer, 4.0 parts of N-methylolacrylamide as an unsaturated carboxylic acid amide monomer, 4.0 parts of allyl glycidyl ether as an unsaturated carboxylic acid epoxy monomer, and 1.5 parts of acrylonitrile as another monomer, the second stage of polymerization was performed with the chemical composition of monomers changed to 45.0 parts of styrene as an aromatic vinyl monomer and 1.0 parts of methacrylic acid as an ethylenically unsaturated carboxylic acid monomer, and the third stage of polymerization was not performed. The results are shown in Table 1.

In Table 1:
"BA" indicates butyl acrylate;
"MAA" indicates methacrylic acid;
"NMA" indicates N-methylolacrylamide;
"AGE" indicates allyl glycidyl ether;
"AN" indicates acrylonitrile;
"St" indicates styrene; and
"Emulsifier" indicates sodium dodecylbenzenesulfonate.

**[Table 1]**

| | | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|---|---|
| | Added in first stage of polymerization | (Meth)acrylic acid ester monomer | Type Amount [parts by mass | BA 79.5 | BA 78.0 | BA 78.0 | BA 76.5 | BA 74.5 | BA 59.5 | BA 76.5 | BA 91.5 | BA 98.0 | BA 96.0 | BA 82.5 | BA 79.5 | BA 81.5 | BA 79.5 | BA 43.5 |
| | | Acidic finctional group-containing monomer (carboxyl group-containing monomer) | Type Amount [parts bv mass] | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 | MAA 1.0 |
| | | Unsaturated carboxylic acid amide monomer | Type Amount [parts by mass] | | NMA 1.5 | | NMA 1.5 | NMA 1.5 | NMA 1.5 | NMA 1.5 | NMA 1.5 | | NMA 1.0 | | NMA 1.5 | | NMA 1.5 | NMA 4.0 |
| | | Cross-linkable monomer unit (unsaturated carboxylic acid epoxy monomer) (unsaturated oxylic acid | Type Amount [parts by mass] Amount U11 [parts by mass] | | | AGE 1.5 | AGE 1.5 | AGE 1.5 | AGE 1.5 | AGE 1.5 | AGE 1.5 | | AGE 1.0 | | AGE 1.5 | | AGE 1.5 | AGE 4.0 |
| Components of particulate binder | | Other monomer | Type Amount [parts by mass] | AN 1.5 | AN 1.5 | AN 1.5 | AN 1.5 | AN 1.5 | AN 1.5 | AN 1.5 | AN 1.5 | AN 1.0 | AN 1.0 | AN 1.5 | AN 1.5 | AN 1.5 | AN 1.5 | AN 1.5 |
| | Added in second stage of polymerization | Aromatic vinyl monomer | Type Amount [parts bv mass] | St 15.0 | St 15.0 | St 15.0 | St 15.0 | St 15.0 | St 15.0 | St 15.0 | | | | St 15.0 | St 15.0 | St 15.0 | St 15.0 | St 45.0 |
| | | Acidic finctional group-containing monomer (carboxyl group-containing monomer) | Type Amount [parts by mass] | | | | | | | | | | | | | MAA 1.0 | | MAA 1.0 |
| | Added in third stage of polymerization | Acidic functional group-containing monomer (carboxyl group-containing monomer) | Type Amount [parts by mass] | MAA 3.0 | MAA 3.0 | MAA 3.0 | MAA 3.0 | MAA 5.0 | MAA 20.0 | MAA 3.0 | MAA 3.0 | | | | | | | |
| | Total monomer unit content | | Amount [parts by mass | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| | Amount of emulsifier in polymer | | Amount [parts by mass | 0.3 | 0.3 | 0.3 | 0.3 | 0.3 | 0.3 | 0.9 | 0.3 | 0.3 | 0.3 | 0.3 | 0.3 | 0.3 | 0.3 | 0.3 |
| | Mixed with first polymer | | Type Amount [parts by mass] | | | | | | | | | | | | | | ARON T-50 5 | |
| | B-type viscosity (@pH 6, solid content concertration 30%) | η1 (mPa·sec) | [mPa·s] | 3 | 3 | 3 | 3 | 3 | 3 | 100 | 3 | 2 | 2 | 3 | 3 | 5 | 50 | 3 |
| | B-type viscosity (@pH 8, solid content concertration 30%) | η2 (mPa·sec) | [mPa·s] | 100 | 100 | 100 | 100 | 200 | 3,500 | 500 | 100 | 3 | 3 | 5 | 5 | 9 | 500 | 5 |
| | @pH 6/@pH 8 | (η2-η1)/η1 | | 32.3 | 32.3 | 32.3 | 32.3 | 65.7 | 1,165.7 | 4.0 | 32.3 | 0.5 | 0.5 | 0.7 | 0.7 | 0.8 | 9.0 | 0.7 |
| | Volume-average particle diameter measured by laser diffraction/scattering | Db | [nm] | 430 | 430 | 430 | 430 | 440 | 460 | 200 | 430 | 410 | 420 | 290 | 340 | 390 | 340 | 450 |
| Measurement | Average particle diameter measured by dynamic light scattering | Da(pH6) | [nm] | 420 | 420 | 420 | 420 | 430 | 440 | 190 | 420 | 390 | 410 | 280 | 360 | 400 | 360 | 440 |
| | | Da(pH8) | [nm] | 750 | 750 | 750 | 760 | 790 | 830 | 330 | 760 | 390 | 410 | 280 | 355 | 410 | 370 | 440 |
| | | Da(pH8)/Da(pH6) | [-] | 1.79 | 1.79 | 1.79 | 1.81 | 1.84 | 1.89 | 1.74 | 1.81 | 1.00 | 1.00 | 1.00 | 0.99 | 1.03 | 1.03 | 1.00 |
| | @pH 6 | Da(pH6)/Db | [-] | 0.98 | 0.98 | 0.98 | 0.98 | 0.98 | 0.96 | 0.95 | 0.98 | 0.95 | 0.98 | 0.97 | 1.06 | 1.03 | 1.06 | 0.98 |
| | @pH 8 | Da(pH8)/Db | [-] | 1.74 | 1.74 | 1.74 | 1.77 | 1.80 | 1.80 | 1.65 | 1.77 | 0.95 | 0.98 | 0.97 | 1.04 | 1.05 | 1.09 | 0.98 |
| | Binder tackiness | | | B | A | A | A | A | A | A | B | C | C | C | B | B | B | A |
| | Peel strength | | | B | A | A | A | A | A | B | A | C | C | C | C | C | C | C |
| Evaluation | High-speed coating peel strength | | | B | B | B | A | A | A | A | A | C | C | C | C | C | C | C |
| | Internal resistance | | | A | A | A | A | A | B | A | A | A | A | B | B | B | B | C |
| | Cycle characteristics | | | B | A | A | A | A | A | A | A | C | C | C | C | C | C | D |

It can be seen from Table 1 that by using the binder compositions produced in Examples 1 to 7, which are within the scope of the present disclosure, it is possible to provide a binder composition for a non-aqueous secondary battery electrode that has good tackiness and that enables the formation of an electrode for a non-aqueous secondary battery having excellent peel strength.

### INDUSTRIAL APPLICABILITY

According to the present disclosure, it is possible to provide a binder composition for a non-aqueous secondary battery electrode that has good tackiness and that enables the formation of an electrode for a non-aqueous secondary battery having excellent peel strength.

Moreover, according to the present disclosure, it is possible to provide a slurry composition for a non-aqueous secondary battery electrode that enables the formation of an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

## Claims

1. A binder composition for a non-aqueous secondary battery electrode comprising a particulate binder and water, wherein
the particulate binder includes a polymer (A) including a (meth)acrylic acid ester monomer unit, and
a ratio Da_{(pH8.0)}/Da_{(pH6.0)} of an average particle diameter Da_{(pH8.0)} of the particulate binder measured by dynamic light scattering at pH 8.0 relative to an average particle diameter Da_{(pH6.0)} of the particulate binder measured by dynamic light scattering at pH 6.0 is more than 1.10.

2. The binder composition for a non-aqueous secondary battery electrode according to claim 1, wherein the particulate binder includes, in a surface layer portion, a polymer (B) including an acidic functional group-containing monomer unit in a proportion of 80 mass% or more.

3. The binder composition for a non-aqueous secondary battery electrode according to claim 2, wherein the particulate binder includes a particle that contains the polymer (A) at an inner side of the surface layer portion.

4. The binder composition for a non-aqueous secondary battery electrode according to claim 3, wherein
the particle is a core-shell particle including a core portion and a shell portion,
the core portion contains the polymer (A), and
the polymer (A) includes the (meth)acrylic acid ester monomer unit in a proportion of 80 mass% or more.

5. The binder composition for a non-aqueous secondary battery electrode according to claim 4, wherein the shell portion contains a polymer (C) including an aromatic vinyl monomer unit in a proportion of 80 mass% or more.

6. The binder composition for a non-aqueous secondary battery electrode according to claim 4, wherein a proportion constituted by the core portion in the particulate binder is not less than 50 mass% and not more than 98 mass%.

7. The binder composition for a non-aqueous secondary battery electrode according to claim 1, having a pH of not lower than 6.0 and not higher than 10.0.

8. A slurry composition for a non-aqueous secondary battery electrode comprising: an electrode active material; and the binder composition for a non-aqueous secondary battery electrode according to any one of claims 1 to 7.

9. An electrode for a non-aqueous secondary battery comprising an electrode mixed material layer formed using the slurry composition for a non-aqueous secondary battery electrode according to claim 8.

10. A non-aqueous secondary battery comprising a positive electrode, a negative electrode, a separator, and an electrolyte solution, wherein at least one of the positive electrode and the negative electrode is the electrode for a non-aqueous secondary battery according to claim 9.
